# EUROPEAN PATENT APPLICATION

(11) **EP 4 186 994 A1**
(43) Date of publication of application: **31.05.2023**
(21) Application number: 21845901.4
(22) Date of filing: 21.07.2021
(51) Int. Cl.: C23F 1/20, B29C 45/14, B29C 65/70, B32B 3/30, B32B 15/08, B32B 27/06

(54) **METAL MEMBER, METAL-RESIN COMPOSITE, AND METHOD FOR PRODUCING METAL MEMBER**

(30) Priority: 22.07.2020 JP 2020125708
(71) Applicant: Mitsui Chemicals, Inc., Tokyo 104-0028 (JP)
(72) Inventor: SHIMAZAKI, Junya, Sodegaura-shi, Chiba 299-0265 (JP); SUMITA, Daiki, Sodegaura-shi, Chiba 299-0265 (JP)
(74) Representative: J A Kemp LLP
(86) International application number: PCT/JP2021/027416
(87) International publication number: WO 2022/019339

(57) **Abstract**

A metal member has a region in which a dendritic layer is formed on a surface. The region has an arithmetic average roughness Ra of 20.0 µm or less.

## Description

### Technical Field

The present invention relates to a metal member, a metal-resin composite, and a method for manufacturing a metal member.

### Background Art

Techniques for integrating a metal member and a resin member without using an adhesive (hereinafter, referred to as "metal-resin integration techniques") have been actively developed mainly in the electric field and the automobile field.

Patent Document 1 discloses a composite. The composite disclosed in Patent Document 1 includes a metal member and a resin member. A surface of the metal member is covered with openings of holes formed by an anodic oxidation method. The holes of the openings have a number average inner diameter of 10 to 80 nm as measured by electron microscopic observation. The resin member is fixed to the metal member by injection molding. A resin component composition of the resin member includes 70 to 99 mass% of polyphenylene sulfide and 1 to 30 mass% of a polyolefin resin.

Patent Document 1: Japanese Patent Application Laid-Open (JP-A) No. 2007-50630

### SUMMARY OF INVENTION

### Technical Problem

However, the composite disclosed in Patent Document 1 may have insufficient joining strength between the metal member and the resin member.

In the metal-resin integration technique, the resin member may be joined to a part of a roughened surface that is roughened in the surface of the metal member in some cases. In this case, a region of the roughened surface of the metal member to which the resin member is not joined (hereinafter, referred to as "exposed region") is exposed. Unique metallic luster and the like of a material for the metal member may be lost by roughening. Therefore, in particular, in the field of industrial design and the like, there is a demand for a technique in which a change in appearance due to roughening is suppressed in the exposed region.

In view of the above circumstances, an object of the present disclosure is to provide a metal member, a metal-resin composite, and a method for manufacturing a metal member capable of suppressing a change in appearance due to roughening and securing sufficient joining strength with a resin member without using an adhesive or the like.

### Solution to Problem

Means for solving the problems include the following embodiments.
<1> A metal member having a region in which a dendritic layer is formed on a surface, wherein the region has an arithmetic average roughness Ra of 20.0 µm or less.
<2> A metal member having a region in which a dendritic layer is formed on a surface, wherein the region has an L value in a CIE 1976 (L*a*b*) color space of 65 or more.
<3> The metal member according to <1> or <2>, wherein an arithmetic average roughness Ra of the region is 0.3 µm or more.
<4> The metal member according to any one of <1> to <3>, wherein the region has a roughened surface, and wherein, in the region, an absolute value of a difference in L value in a CIE 1976 (L*a*b*) color space between a state in which the surface of the metal member is not roughened and a state in which the surface of the metal member is roughened is 6.0 or less.
<5> The metal member according to any one of <1> to <4>, wherein, in the region, an abundance proportion of a metal oxide on the surface of the metal member as measured by X-ray photoelectron spectroscopy (XPS) is 80 area% or more with respect to a total of the metal oxide, a metal hydroxide, and water.
<6> The metal member according to any one of <1> to <5>,
   wherein the metal member contains aluminum,
   wherein the surface of the metal member is subjected to Fourier transform infrared spectroscopic analysis in the region, and
   wherein, when an absorbance of an absorption peak observed at 3400 cm⁻¹ is A₁, and an absorbance at 3400 cm⁻¹ on a straight line connecting an absorbance at 3800 cm⁻¹ and an absorbance at 2500 cm⁻¹ is A₀, an absorbance difference (A₁ - A₀) is 0.03 or less.
<7> The metal member according to any one of <1> to <6>,
   wherein the metal member contains aluminum, and
   wherein a content of Si in the metal member is less than 6 mass% with respect to a total amount of the metal member.
<8> The metal member according to any one of <1> to <7>, wherein an arithmetic average roughness Ra of the region is 5.0 µm or less.
<9> The metal member according to any one of <1> to <8>, wherein an arithmetic average roughness Ra of the region is 2.5 µm or less.
<10> The metal member according to any one of <1> to <9>, wherein an average number density of main stems of the dendritic layer is 5/µm or more and 70/µm or less.
<11> A metal-resin composite including:
   the metal member according to any one of <1> to <10>; and
   a resin member joined to at least a part of the surface of the metal member via the dendritic layer in the region.
<12> A method for manufacturing a metal member including a dendritic layer formation step of etching at least a part of a surface of a metal member with an oxidizing acidic aqueous solution to form a dendritic layer,
   wherein the oxidizing acidic aqueous solution contains a metal cation having a standard electrode potential E⁰ at 25°C of more than -0.2 and 0.8 or less.
<13> The method for manufacturing a metal member according to <12>, which further including a roughening step of roughening a surface of a region of the surface of the metal member, in which the dendritic layer is formed, and setting an arithmetic average roughness Ra of the surface of the region to 20.0 µm or less, or setting an L value, in a CIE 1976 (L*a*b*) color space, of the surface of the region to 65 or more,
   wherein the roughening step and the dendritic layer formation step are executed in this order.
<14> The method for manufacturing a metal member according to <12> or <13>, wherein the oxidizing acidic aqueous solution contains cupric oxide.

### Advantageous Effects of Invention

The present disclosure provides a metal member, a metal-resin composite, and a method for manufacturing a metal member capable of suppressing a change in appearance due to roughening and securing sufficient joining strength with a resin member without using an adhesive or the like.

### BRIEF DESCRIPTION OF DRAWINGS

Fig. 1 is a cross-sectional view of a metal member according to a first embodiment of the present disclosure.
Fig. 2 is a cross-sectional view of the metal member according to the first embodiment of the present disclosure.
Fig. 3 is a spectrum chart of Fourier transform infrared spectroscopic analysis for explaining an absorbance difference (A₁ - A₀).
Fig. 4 is a perspective view of a metal-resin composite according to the first embodiment of the present disclosure.
Fig. 5 is a scanning electron microscope (SEM) photograph (photographing magnification: 100,000 times) of a cross section of a metal member of Example 1.
Fig. 6 is a top view of a metal member for explaining a method for measuring surface roughness.
Fig. 7 is an SEM photograph (photographing magnification: 50,000 times) of a cross section of a metal-resin composite of Example 1.
Fig. 8 is a spectrum chart of Fourier transform infrared spectroscopic analysis for measuring absorbance differences (A₁ - A₀) of Example 1, Reference Example 1, and Reference Example 2.
Fig. 9 is an SEM photograph (photographing magnification: 100,000 times) of a cross section of a metal member of Example 13.
Fig. 10 is an SEM photograph (photographing magnification: 100,000 times) of a cross section of a metal member of Example 14.

### DESCRIPTION OF EMBODIMENTS

Hereinafter, embodiments of a metal member, a metal-resin composite, and a method for manufacturing a metal member according to the present disclosure will be described with reference to the drawings. In the drawings, the same or corresponding portions are denoted by the same reference numerals, and the descriptions thereof will not be repeated.

### (1) First Embodiment

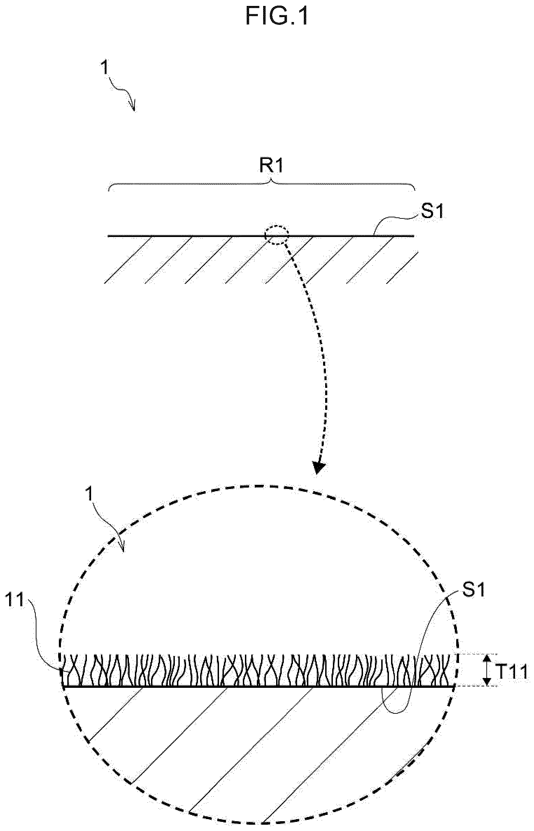

A metal member 1 according to a first embodiment of the present disclosure will be described with reference to Figs. 1 to 3. Fig. 1 is a cross-sectional view of the metal member 1 according to the first embodiment of the present disclosure. Specifically, Fig. 1 shows a cross section of a dendritic layer 11 in a joining region R1.

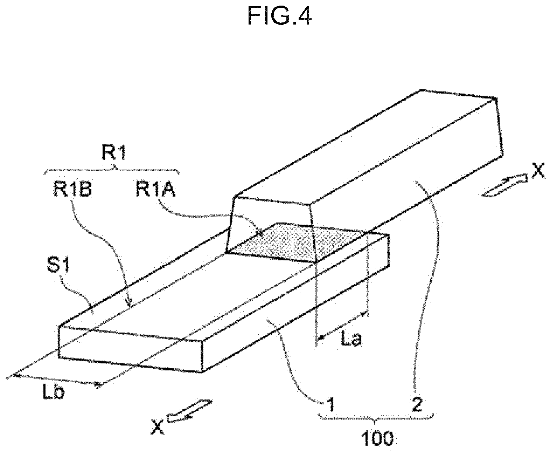

The metal member 1 is suitably used as a component of a metal-resin composite 100. The metal-resin composite 100 is an integrated product of the metal member 1 and a resin member 2. The resin member 2 is fixed to the metal member 1 without using an adhesive, a bolt, a rivet, or the like. Details of the metal-resin composite 100 will be described later with reference to Fig. 4.

In the first embodiment, as shown in Fig. 1, the metal member 1 has a region R1 (hereinafter, referred to as "joining region R1") in which the dendritic layer 11 is formed on a surface S1. The joining region R1 has an arithmetic average roughness Ra of 20.0 µm or less.

The dendritic layer 11 is a layer composed of a plurality of stems and having nano-order gaps between the stems. The stems may have further branches. Hereinafter, a stem standing from the surface S1 of the joining region R1 is referred to as "main stem", a branch branched from the main stem is referred to as "main branch", and a branch branched from the main branch is referred to as "side branch". Details of the dendritic layer 11 will be described later with reference to Fig. 1.

In the first embodiment, the metal member 1 has the joining region R1. Therefore, when the resin member 2 is joined to the metal member 1, a melt of the resin member 2 effectively enters a recess of the dendritic layer 11. Thus, a physical resistance force (anchor effect) is effectively exerted between the metal member 1 and the resin member 2. That is, the dendritic layer 11 enables firm joining between the metal member 1 and the resin member 2, which has been conventionally difficult. The arithmetic average roughness Ra of the joining region R1 is 20.0 µm or less, and a change in appearance due to roughening is suppressed. As a result, the metal member 1 suppresses a change in appearance due to roughening, and can secure sufficient joining strength with the resin member 2 without using an adhesive or the like.

A macroscopic shape of the metal member 1 is not particularly limited, and can be appropriately adjusted according to the application of the metal-resin composite 100 or the like. Examples of the macroscopic shape of the metal member 1 include a flat plate shape, a disk shape, a curved plate shape, a rod shape, a cylindrical shape, and a lump shape. The macroscopic shape of the surface S1 of the metal member 1 is not particularly limited, and examples thereof include a planar shape and a curved shape.

Examples of a material for the metal member 1 include aluminum, magnesium, copper, stainless steel, titanium, iron, bronze, manganese, chromium, tin, zirconia, lead, nickel, and alloys thereof. The material for the metal member 1 is preferably aluminum or an aluminum alloy, from the viewpoint of excellent workability, corrosion resistance, and the like.

Hereinafter, the alloy number defined in JIS H 4000 is referred to as "alloy number".

Examples of the aluminum and aluminum alloy include pure Al (alloy number: 1000 series), Al-Cu-based alloys (alloy number: 2000 series), Al-Mn-based alloys (alloy number: 3000 series), Al-Si-based alloys (alloy number: 4000 series), Al-Mg-based alloys (alloy number: 5000 series), Al-Mg-Si-based alloys (alloy number: 6000 series), and Al-Zn-based alloys (alloy number: 7000 series). Examples of the pure Al include 1050, 1100, and 1200. Examples of the Al-Cu-based alloy include 2011, 2014, 2017, and 2024. Examples of the Al-Mn-based alloy include 3003 and 3004. Examples of the Al-Si-based alloy include 4032. Examples of the Al-Mg-based alloy include 5005, 5052, and 5083. Examples of the Al-Mg-Si-based alloy include 6061 and 6063. Examples of the Al-Zn-based alloy include 7075.

Hereinafter, the metal member 1 containing aluminum is referred to as "aluminum-based metal member 1" in some cases.

In the aluminum-based metal member 1, a content of Si in the metal member 1 is preferably less than 6 mass% with respect to a total amount of the metal member 1. The aluminum-based metal member 1 is preferably 1050, 1100, 2014, 2024, 3003, 5052, 6063, or 7075.

### (1.1) Joining region R1

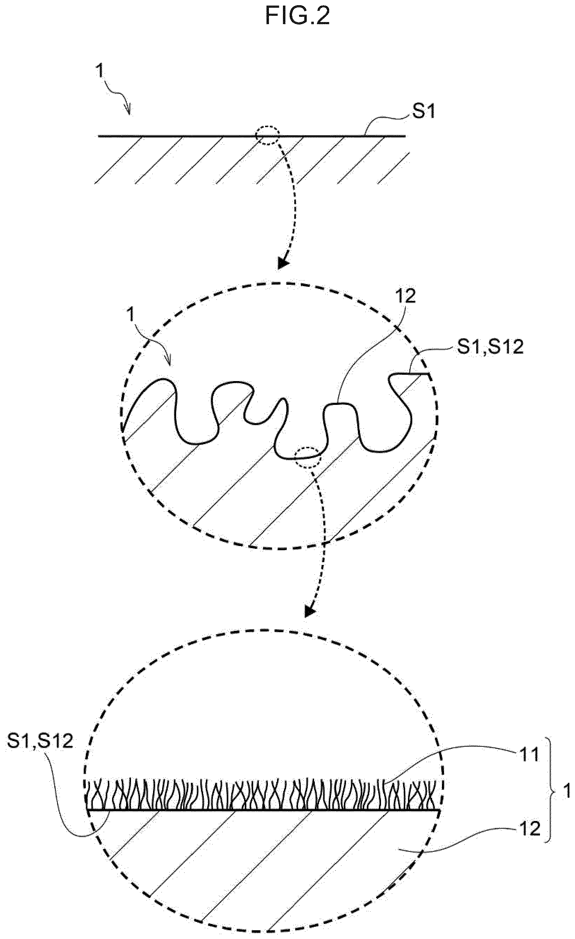

Next, the joining region R1 according to the first embodiment of the present disclosure will be described with reference to Figs. 1 to 3. Fig. 2 is a cross-sectional view of the metal member 1 according to the first embodiment of the present disclosure. Specifically, Fig. 2 shows a cross section of the dendritic layer 11 and an uneven structure 12 in the joining region R1.

The joining region R1 has only to be at least a part of the surface S1 of the metal member 1, and can be appropriately adjusted according to, for example, the application of the metal-resin composite 100. Specifically, the joining region R1 may be the entire surface S1 of the metal member 1, or, when the surface S1 of the metal member 1 has a plurality of main surfaces, the joining region R1 may be the entire or partial surfaces of some of the plurality of main surfaces.

In the first embodiment, an upper limit of the arithmetic average roughness (Ra) of the joining region R1 is 20.0 µm or less, preferably 10.0 µm or less, more preferably 8.0 µm or less, still more preferably 6.0 µm or less, particularly preferably 5.0 µm or less, and still more preferably 2.5 µm or less, from the viewpoint of suppressing a change in appearance due to roughening.

A lower limit of the arithmetic average roughness (Ra) of the joining region R1 is preferably 0.2 µm or more, and more preferably 0.3 µm or more. When the lower limit of the arithmetic average roughness (Ra) is 0.2 µm or more, sufficient joining strength is obtained when the resin member 2 is joined to the metal member 1.

The lower limit of the arithmetic average roughness (Ra) of the joining region R1 falling within the above range indicates that the micro-order uneven structure 12 as shown in Fig. 2 is formed on the surface S1 of the metal member 1 in the joining region R1. The dendritic layer 11 is formed on a surface S12 of the uneven structure 12. The surface S12 of the uneven structure 12 constitutes at least a part of the surface S1 of the metal member 1. In this case, the surface S1 of the metal member 1 in the joining region R1 is a double rough surface. The double rough surface is composed of the nano-order dendritic layer 11 and the micro-order uneven structure 12.

If the lower limit of the arithmetic average roughness (Ra) falls within the above range, when the resin member 2 is joined to the joining region R1 of the metal member 1, a physical resistance force (anchor effect) is more effectively exerted between the metal member 1 and the resin member 2 due to the uneven structure 12. Therefore, the joining strength between the metal member 1 and the resin member 2 is further improved. If the lower limit of the arithmetic average roughness (Ra) falls within the above range, when the metal-resin composite 100 is manufactured by insert molding, the metal-resin composite 100 can be manufactured even if the temperature of a mold is made significantly lower than that when the lower limit of the arithmetic average roughness (Ra) falls outside the above range. As a result, an amount of warpage and an amount of deformation of the metal-resin composite 100 generated in a process of cooling the metal-resin composite 100 to an environmental temperature after it is taken out of the mold are suppressed.

A method for measuring the arithmetic average roughness (Ra) is the same as the method described in the Examples in accordance with JIS B 0601. The nano-order dendritic layer 11 hardly affects the measurement of the arithmetic average roughness (Ra).

An upper limit of a ten-point average roughness (Rzjis) of the joining region R1 is preferably 50 µm or less, more preferably 35 µm or less, still more preferably 25 µm or less, and particularly preferably 15 µm or less. A lower limit of the ten-point average roughness (Rzjis) of the joining region R1 is preferably 2 µm or more, and more preferably 5 µm or more. A method for measuring the ten-point average roughness (Rzjis) is the same as the method described in the Examples in accordance with JIS B 0601. The nano-order dendritic layer 11 hardly affects the measurement of the ten-point average roughness (Rzjis).

If the upper limit of the ten-point average roughness (Rzjis) is 35 µm or less, the L value of the joining region R1 tends to be 70 or more when the metal member 1 is an aluminum-based metal member 1. If the upper limit of the ten-point average roughness (Rzjis) is 25 µm or less, the L value of the joining region R1 tends to be 75 or more when the metal member 1 is an aluminum-based metal member 1. If the upper limit of the ten-point average roughness (Rzjis) is 15 µm or less, the L value of the joining region R1 tends to be 80 or more when the metal member 1 is an aluminum-based metal member 1. The L value will be described later.

If the lower limit of the ten-point average roughness (Rzjis) is 2 µm or more, the joining strength tends to be 24 MPa or more. If the lower limit of the ten-point average roughness (Rzjis) is 5 µm or more, the joining strength tends to be 25 MPa or more. The method for measuring the joining strength is the same as the method described in the Examples. In this paragraph, the joining strength indicates strength of joining between the metal member 1 and the resin member 2 when the resin member 2 made of the same material as that of Example 1 is joined to the joining region R1 of the metal member 1.

An upper limit of an average length (RSm) (hereinafter, referred to as "average length (RSm)") of a roughness curve element of the joining region R1 is preferably less than 400 µm, more preferably 350 µm or less, still more preferably 330 µm or less, particularly preferably 250 µm or less, and even more preferably 230 µm or less. The lower limit of the average length (RSm) is preferably more than 10 µm, more preferably 50 µm or more, and still more preferably 70 µm or more. A method for measuring the average length (RSm) is the same as the method described in the Examples in accordance with JIS B 0601. The nano-order dendritic layer hardly affects the measurement of the average length (RSm).

Hereinafter, the arithmetic average roughness (Ra), the ten-point average roughness (Rzjis), and the average length (RSm) of the joining region R1 are collectively referred to as "surface roughness" in some cases.

In the first embodiment, a lower limit of the L value in the CIE 1976 (L*a*b*) color space of the joining region R1 is preferably 65 or more, more preferably 70 or more, still more preferably 75 or more, particularly preferably 80 or more, and even more preferably 85 or more. The lower limit of the L value is preferably as high as possible. The L value indicates brightness. A higher L value indicates that metallic luster is closer to the metallic luster before roughening. In general, the L value of a flat surface of the metal member 1 is about 90 (hereinafter, described as "untreated L value") when the material for the metal member 1 is the aluminum-based metal member 1. If the lower limit of the L value falls within the above range, a difference between the L value of the joining region R1 and the untreated L value is about 25 at the maximum. Therefore, the surface roughness of the joining region R1 is less noticeable with respect to the flat surface. Therefore, a higher L value of the metal member 1 indicates that the change in appearance due to the surface roughness is less likely to occur. A method for measuring the L value is the same as the method described in the Examples. Note that a minor amount of error may be caused in a measured value of the L value as measured by the method described in the Examples. The minor amount of error in measured value of the L value is, for example, about ± 4.

When the surface of the joining region R1 is roughened, in the joining region R1, an absolute value of a difference in L value in the CIE 1976 (L*a*b*) color space between a state where the surface S1 of the metal member 1 is not roughened and a state where the surface S1 of the metal member 1 is roughened is preferably 6.0 or less, more preferably 5.0 or less, and still more preferably 3.0 or less. If the absolute value of the difference in L value falls within the above range, the metallic luster in the state where the surface S1 of the metal member 1 is not roughened and the metallic luster in the state where the surface S1 of the metal member 1 is roughened are equal or substantially equal to each other. That is, it means that there is a little change in appearance between the state where the surface S1 of the metal member 1 is not roughened and the state where the surface S1 of the metal member 1 is roughened.

In the present disclosure, the state where the surface S1 of the metal member 1 is not roughened includes a first state and a second state. The first state indicates a state before the dendritic layer 11 and the uneven structure 12 are formed by roughening in the joining region R1. That is, in the first state, the absolute value of the difference in L value indicates an absolute value of the difference between the L values before and after roughening at a predetermined site of the joining region R1 of the metal member 1. The second state indicates a region that is not the joining region R1 in the surface S1 of the metal member 1 when the joining region R1 is formed on a part of the surface S1 of the metal member 1. That is, in the second state, the absolute value of the difference in L value indicates an absolute value of the difference between the L value in the joining region R1 and the L value outside the joining region R1.

In the aluminum-based metal member 1, in the joining region R1, an upper limit of the absorbance difference (A₁ - A₀) determined by Fourier transform infrared spectroscopic analysis of the surface S1 of the metal member 1 is preferably 0.030 or less, and more preferably 0.020 or less. A lower limit of the absorbance difference (A₁ - A₀) is more preferably 0.005 or more, and still more preferably 0.010 or more.

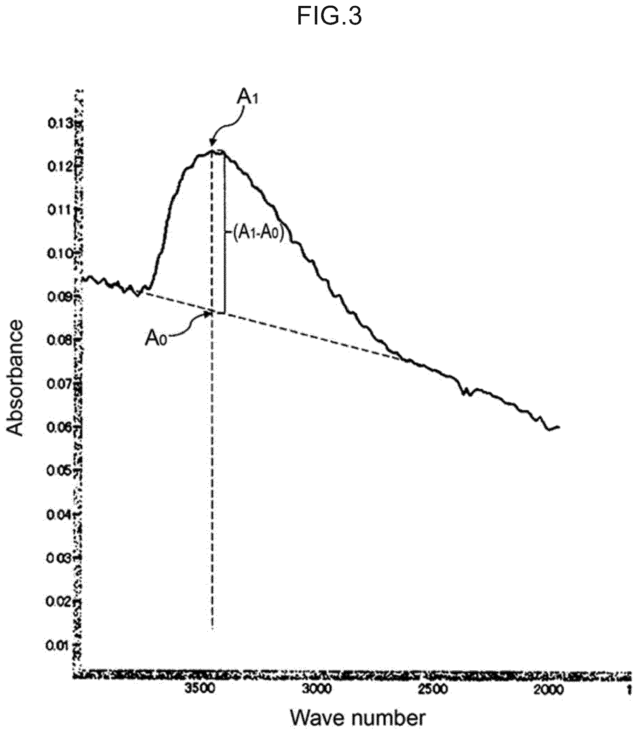

Fig. 3 is a spectrum chart of the Fourier transform infrared spectroscopic analysis for explaining the absorbance difference (A₁ - A₀). In Fig. 3, A₁ represents an absorbance of an absorption peak observed at 3400 cm⁻¹. A₀ represents an absorbance at 3400 cm⁻¹ of a straight line connecting an absorbance at 3800 cm⁻¹ and an absorbance at 2500 cm⁻¹. (A₁ - A₀) represents an absorbance difference between A₁ and A₀ at 3400 cm⁻¹. A Fourier transform infrared spectrophotometer (FTIR) is used for the Fourier transform infrared spectroscopic analysis. In the measurement with the Fourier transform infrared spectrophotometer (FTIR), a reflection absorption spectroscopy (RAS method) is adopted, and an incident angle of infrared light is 85°.

A broad absorption peak observed by the Fourier transform infrared spectroscopic analysis and having a peak top at 3400 cm⁻¹ is estimated to be a peak attributable to aluminum hydroxide or aluminum hydrous oxide. The absorbance difference (A₁ - A₀) is an index indicating a degree of hydroxyl group retention on the surface S1 of the metal member 1.

A relationship between an amount of hydroxyl groups on the surface S1 of the metal member 1 and the joining strength is still unclear in many respects. The present inventors consider this relationship as follows. Specifically, when there are more hydroxyl groups on the surface S1 of the metal member 1, moisture in the environment is easily adsorbed on the surface S1 of the metal member 1. Therefore, a water molecular layer is easily formed on the surface S1 of the metal member 1. In particular, in a high-humidity environment, the water molecular layer is more easily formed on the surface S1 of the metal member 1. As a result, it is considered that the joining strength between the metal member 1 and the resin member 2 may decrease.

Therefore, the fact that the absorbance difference (A₁ - A₀) is 0.030 or less indicates that the amount of hydroxyl groups retained in the joining region R1 is relatively small. That is, the water molecular layer is hardly formed on the surface S1 of the metal member 1 in the joining region R1. As a result, the metal member 1 can maintain sufficient joining strength over a longer period of time, even when the resin member 2 is joined to the joining region R1 and the obtained metal-resin composite 100 is exposed to a high-humidity environment.

In the joining region R1, a lower limit of an abundance proportion of a metal oxide on the surface S1 of the metal member 1 as measured by X-ray photoelectron spectroscopy (XPS) is 80 area% or more, more preferably 85 area% or more, and still more preferably 90 area% or more with respect to a total of the metal oxide, a metal hydroxide, and water. That is, the surface S1 of the joining region R1 is preferably mainly composed of a metal oxide. If the lower limit of the abundance proportion of the metal oxide in the joining region R1 falls within the above range, the water molecular layer is more hardly formed on the surface S1 of the metal member 1 in the joining region R1. The water molecular layer is formed by absorption of moisture in the environment. As a result, the metal member 1 can maintain sufficient joining strength over a longer period of time, even when the resin member 2 is joined to the surface S1 of the joining region R1 and the obtained metal-resin composite 100 is exposed to a high-humidity environment.

In the joining region R1, the abundance proportion of the metal oxide is obtained from an energy peak (area%) of O²⁻ in a distribution of binding energy as measured by X-ray photoelectron spectroscopy (XPS). XPS is performed for a measurement range of several millimeters in diameter of the joining region R1 after removal of an oil content from the surface S1 of the joining region R1 by argon sputtering or the like. The abundance proportion of the obtained substance indicates an average in this measurement range. When the metal member 1 is the aluminum-based metal member 1, the metal oxide indicates Al₂O₃, the metal hydroxide indicates Al(OH)₃, and the energy peak of O²⁻ indicates an energy peak of Al₂O₃.

An upper limit of a specific surface area of the joining region R1 is preferably 1.00 m²/g or less, and more preferably 0.50 m²/g or less. A lower limit of the specific surface area of the joining region R1 is preferably 0.01 m²/g or more, and more preferably 0.05 m²/g. If the specific surface area of the joining region R1 falls within the above range, a larger amount of the melt of the resin member 2 enters the metal member 1 when the resin member 2 is joined to the metal member 1. As a result, the metal member 1 can improve the joining strength with the resin member 2. A method for measuring the specific surface area of the joining region R1 is the same as the method described in the Examples.

### (1.2) Dendritic layer

Next, the dendritic layer 11 according to the first embodiment of the present disclosure will be described with reference to Figs. 1 to 3.

An upper limit of an average thickness T11 of the dendritic layer 11 (see Fig. 1) is preferably less than 1000 nm, more preferably 900 nm or less, still more preferably 800 nm or less, and particularly preferably 700 nm or less. A lower limit of the average thickness T11 of the dendritic layer 11 is preferably 20 nm or more, more preferably 30 nm or more, still more preferably 50 nm or more, and particularly preferably 100 nm or more. A method for measuring the average thickness T11 of the dendritic layer 11 is the same as the method described in the Examples.

If the average thickness T11 of the dendritic layer 11 falls within the above range, the metal member 1 can maintain sufficient joining strength with the resin member 2 over a longer period of time when the resin member 2 is joined to at least a part of the joining region R1. Furthermore, the occurrence of deterioration in surface properties of the joining region R1 can be suppressed. That is, a pot life can be further extended. Therefore, for example, when the metal-resin composite 100 is manufactured by insert molding as a type of injection molding, a predetermined number of the metal members 1 have only to be collectively manufactured and sequentially used within the pot life. In other words, the metal member 1 may not be manufactured immediately before each time when the metal-resin composite 100 is manufactured.

An upper limit of the average number density of the main stems of the dendritic layer 11 is preferably 70/µm or less, more preferably 40/µm or less, still more preferably 35/µm or less, and particularly preferably 30/µm or less. A lower limit of the average number density of the main stems of the dendritic layer 11 is preferably 5/µm or more, more preferably 7/µm or more, and still more preferably 10/µm or more. The average number density of the main stems of the dendritic layer 11 is the same as the method described in the Examples.

If the average number density of the main stems of the dendritic layer 11 falls within the above range, the metal member 1 can exhibit stronger joining strength with the resin member 2 when the resin member 2 is joined to at least a part of the joining region R1.

### (2) Metal-resin composite

Next, the metal-resin composite 100 according to the first embodiment of the present disclosure will be described with reference to Figs. 1 to 4. Fig. 4 is a perspective view of the metal-resin composite 100 according to the first embodiment of the present disclosure.

As shown in Fig. 4, the metal-resin composite 100 includes the metal member 1 and the resin member 2. The resin member 2 is joined to a part (hereinafter, referred to as "joining region R1A") of the surface S1 of the metal member 1 via the dendritic layer 11 in the joining region R1.

Hereinafter, in the metal-resin composite 100, a region R1B that is not the joining region R1A in the joining region R1 is referred to as "exposed region R1B".

In the first embodiment, the joining region R1 has the exposed region R1B, but the present invention is not limited thereto, and the joining region R1 may not have the exposed region R1B.

The exposed region R1B of the metal member 1 in the metal-resin composite 100 is a part of the joining region R1. Therefore, a change in appearance in the exposed region R1B is suppressed. Thus, the metal-resin composite 100 has an excellent degree of freedom in design. In the metal-resin composite 100, the resin member 2 is joined to the metal member 1 via the dendritic layer 11 without using an adhesive, a bolt, a rivet, or the like. Therefore, the metal-resin composite 100 includes fewer components and is lighter than conventional ones, and can cope with a complicated shape.

In the metal-resin composite 100, the joining region R1A of the metal member 1 is substantially the same as the joining region R1 of the metal member 1 before the resin member 2 is joined, in all points including surface microstructure (morphology). That is, the microstructure of the joining region R1A of the metal member 1 does not greatly change before and after the resin member 2 is joined.

### (2.1) Resin member

The resin member 2 is made of a resin composition. The resin composition contains at least one of a thermoplastic resin and a thermoplastic resin.

Hereinafter, at least one of the thermoplastic resin and the thermoplastic resin is referred to as "resin".

The thermoplastic resin is not particularly limited, and can be appropriately adjusted according to the application and the like of the metal-resin composite 100. The thermoplastic resin is not particularly limited. Examples of the thermoplastic resin include polymethacrylic resins such as polymethacrylic resins, polyolefin resins, and polymethyl methacrylate resins; polyacrylic resins such as polymethyl acrylate resins; polystyrene resins; polyvinyl alcohol-polyvinyl chloride copolymer resins; polyvinyl acetal resins; polyvinyl butyral resins; polyvinyl formal resins; polymethylpentene resins; maleic anhydride-styrene copolymer resins; polycarbonate resins; polyphenylene ether resins; polyether ether ketone resins; aromatic polyether ketones such as polyether ketone resins; polyester resins; polyamide resins; polyamideimide resins; polyimide resins; polyether imide resins; styrene elastomers; polyolefin elastomers; polyurethane elastomers; polyester elastomers; polyamide elastomers; ionomers; amino polyacrylamide resins; isobutylene maleic anhydride copolymers; acrylonitrile-butadiene-styrene copolymers (ABS); acrylonitrile-chlorinated polyethylene-styrene copolymers (ACS), acrylonitrile-ethylene propylene rubber-styrene copolymers (AES); acrylonitrile-styrene copolymer resins (AS); acrylonitrile-styrene-acrylic rubber copolymer resins (ASA); methyl methacrylate-butadiene-styrene copolymers (MBS); ethylene-vinyl chloride copolymers; ethylene-vinyl acetate copolymers, ethylene-vinyl acetate-vinyl chloride graft polymers; ethylene-vinyl alcohol copolymers; chlorinated polyvinyl chloride resins; chlorinated polyethylene resins; chlorinated polypropylene resins; carboxyvinyl polymers; ketone resins; amorphous co-polyester resins; norbornene resins; fluoroplastics; polytetrafluoroethylene resins; fluorinated ethylene polypropylene resins; tetrafluoroethylene-perfluoroalkyl vinyl ether copolymers (PFA); polychlorofluoroethylene resins; ethylene tetrafluoroethylene copolymers; polyvinylidene fluoride resins; polyvinyl fluoride resins; polyarylate resins; thermoplastic polyimide resins; polyvinylidene chloride resins; polyvinyl chloride resins; polyvinyl acetate resins; polysulfone resins; polypara-methylstyrene resins; polyallylamine resins; polyvinyl ether resins; polyarylene resins such as polyphenylene oxide resins and polyphenylene sulfide (PPS) resins; polymethylpentene resins; oligoester acrylates; xylene resins; maleic acid resins; polyhydroxybutyrate resins; polysulfone resins; polylactic acid resins; polyglutamic acid resins; polycaprolactone resins; polyethersulfone resins; polyacrylonitrile resins; and styrene-acrylonitrile copolymer resins. These thermoplastic resins may be used singly, or two or more thereof may be used in combination.

As the thermoplastic resin, one or more thermoplastic resins selected from a polyolefin resin, a polyester resin, a polyamide resin, and a polyarylene resin are suitably used, from the viewpoint that high joining strength between the metal member 1 and the resin member 2 can be more stably obtained.

Examples of the thermosetting resin include an epoxy resin, a phenol resin, an unsaturated polyester resin, a thermosetting polyimide resin, a bismaleimide triazine resin, and a benzoxazine resin. These thermosetting resins may be used singly, or two or more thereof may be used in combination.

The resin composition preferably contains a filler. Thus, a difference in linear expansion coefficient between the metal member 1 and the resin member 2 can be adjusted, and mechanical strength of the resin member 2 can be improved.

The filler is preferably one or more types selected, for example, from glass fiber, carbon fiber, carbon particles, clay, talc, silica, mineral, and cellulose fiber. Among them, the filler is one or more types selected from glass fiber, carbon fiber, talc, and mineral. A shape of the filler is not particularly limited, and examples thereof include a fibrous shape, a particulate shape, and a plate shape.

When the resin composition contains a filler, an upper limit of a content of the filler is preferably 100 parts by mass or less, more preferably 90 parts by mass or less, and particularly preferably 80 parts by mass or less, based on 100 parts by mass of the resin. A lower limit of the content of the filler is preferably 1 part by mass or more, more preferably 5 parts by mass or more, and particularly preferably 10 parts by mass or more, based on 100 parts by mass of the resin.

The resin composition preferably contains a blending agent. Thus, a desired function can be imparted to the resin member 2. Examples of the blending agent include a heat stabilizer, an antioxidant, a pigment, a weathering agent, a flame retardant, a plasticizer, a dispersant, a lubricant, a mold release agent, and an antistatic agent.

When the resin composition contains the blending agent, an upper limit of a content of the blending agent is preferably 5 parts by mass or less, and more preferably 3 parts by mass or less, based on 100 parts by mass of the resin. A lower limit of the content of the blending agent is preferably 0.0001 parts by mass or more, and more preferably 0.001 parts by mass or more, based on 100 parts by mass of the resin.

### (2.2) Application of metal-resin composite

As described above, the metal-resin composite 100 can be developed for various applications because the change in appearance of the exposed region R1B is suppressed and the joining strength between the metal member 1 and the resin member 2 is sufficient.

Examples of the application of the metal-resin composite 100 include structural components for vehicles, on-vehicle supplies, housings for electronic devices, housings for home appliances, building members, structural components, mechanical components, various automotive components, electronic device components, applications for household goods such as furniture and kitchen utensils, components for medical devices and building materials, other structural components, and exterior components.

### (3) Method for manufacturing metal member

Next, a method for manufacturing the metal member 1 according to the first embodiment of the present disclosure will be described.

The method for manufacturing the metal member 1 includes a first preparation step and a dendritic layer formation step. The first preparation step and the dendritic layer formation step are executed in this order.

The method for manufacturing the metal member 1 preferably further includes at least one of a pretreatment step, a replacement step, a roughening step, and a post-treatment step in addition to the first preparation step and the dendritic layer formation step. When the method for manufacturing the metal member 1 further includes the pretreatment step, the replacement step, the roughening step, and the post-treatment step, the first preparation step, the pretreatment step, the replacement step, the roughening step, the post-treatment step, and the dendritic layer formation step are executed in this order.

Hereinafter, a case where the method for manufacturing the metal member 1 further includes the pretreatment step, the replacement step, the roughening step, and the post-treatment step in addition to the first preparation step and the dendritic layer formation step will be described.

### (3.1) First preparation step

In the first preparation step, a metal substrate is prepared. Each of a macroscopic shape of the metal substrate, a macroscopic shape of a surface of the metal substrate, and a material for the metal substrate is substantially the same as those of the metal member 1.

A method for preparing the metal substrate is not particularly limited, and examples thereof include a method for processing a metal material. The material for the metal material is substantially the same as the material for the metal member 1. A method for processing the metal material is not particularly limited, and examples thereof include plastic processing and thickness-reduction processing. Examples of the plastic processing include cutting of the metal material and pressing of the metal material. Examples of the thickness-reduction processing include punching of the metal material, cutting of the metal material, polishing of the metal material, and electrical discharge processing of the metal material.

### (3.2) Pretreatment step

In the pretreatment step, a coating film present on a surface of the metal substrate is removed. The coating film is made of an oxide, a hydroxide, or the like. Examples of a method for removing the coating film include treatment with an alkaline aqueous solution, mechanical polishing, chemical polishing treatment, degreasing treatment, and ultrasonic cleaning treatment. Examples of the alkaline aqueous solution include an aqueous sodium hydroxide solution and an aqueous potassium hydroxide solution.

### (3.3) Replacement step

In the replacement step, the metal substrate is immersed in a zinc ion-containing aqueous alkali solution. Thus, a zinc-containing coating film is formed on the surface of the metal substrate.

The zinc ion-containing aqueous alkali solution contains alkali hydroxide (MOH or M(OH)₂) and zinc ions (Zn²⁺). M in the alkali hydroxide (MOH or M(OH)₂) is an alkali metal or an alkaline earth metal.

Hereinafter, the alkali hydroxide (MOH or M(OH)₂) is simply referred to as "alkali hydroxide (MOH)".

A content of the alkali hydroxide (MOH) is preferably 1 or more and 100 or less in terms of a weight ratio (MOH/Zn²⁺) of the alkali hydroxide (MOH) to zinc ions (Zn²⁺). The replacement treatment may be, for example, the treatment method disclosed in WO 2013/47365 A.

### (3.4) Roughening step

In the first embodiment, in the roughening step, a surface of a region where the dendritic layer 11 is formed, in the surface of the metal substrate, is roughened, and the arithmetic average roughness Ra of the surface of the region where the dendritic layer 11 is formed is set to 20.0 µm or less. When the surface of the region where the dendritic layer 11 is formed is roughened to set the arithmetic average roughness Ra to 0.3 µm or more, the uneven structure 12 (see Fig. 2) is formed on the surface of the metal substrate. Thus, when the resin member 2 is joined to the metal member 1, the joining strength between the metal member 1 and the resin member 2 is improved.

A method for roughening the surface S1 of the metal member 1 is not particularly limited, and examples thereof include drug solution treatment and mechanical cutting treatment. Examples of the mechanical polishing treatment include sand blasting, knurling, and laser processing. Examples of etching treatment include a treatment with an alkaline etching agent and a treatment with an acid etching agent. These methods can be used singly or appropriately combined. Among them, the treatment with an acid etching agent is preferred.

The acid etching agent preferably contains at least one of a ferric ion and a cupric ion and an acid. This makes it possible to elute the zinc-containing coating film formed in the replacement step on the surface of the metal substrate and to form the micron-order uneven structure 12 (see Fig. 2). As a treatment method using the acid etching agent, for example, treatment methods disclosed in WO 2015/8847, Japanese Patent Application Laid-Open (JP-A) No. 2001-348684, WO 2008/81933, and the like can be adopted.

An upper limit of a temperature of the acid etching agent is preferably 60°C or lower, and more preferably 50°C or lower. A lower limit of the temperature of the acid etching agent is preferably room temperature or higher, and preferably 30°C or higher.

A time of the treatment with the acid etching agent is appropriately adjusted according to, for example, the desired arithmetic average roughness Ra of the joining region R1. The time of the treatment with the acid etching agent can be adjusted to adjust the surface roughness formed on the surface of the metal substrate. An upper limit of the time of the treatment with the acid etching agent is preferably 600 seconds or less, more preferably 500 seconds or less, still more preferably 150 seconds or less, and particularly preferably 10 seconds or less.

When the time of the treatment with the acid etching agent is 500 seconds, the L value of the joining region R1 tends to be 70 or more. When the time of the treatment with the acid etching agent is 150 seconds, the L value of the joining region R1 tends to be 80 or more. When the time of the treatment with the acid etching agent is 100 seconds, the L value of the joining region R1 tends to be 85 or more.

### (3.5) Post-treatment step

In the post-treatment step, the surface of the metal substrate is cleaned. Examples of the cleaning method include water washing and ultrasonic cleaning.

### (3.6) Dendritic layer formation step

In the dendritic layer formation step, at least a part of the surface of the metal substrate is etched with an oxidizing acidic aqueous solution. Thus, the dendritic layer 11 is formed on the surface of the metal substrate. That is, the metal member 1 is obtained.

The oxidizing acidic aqueous solution contains a metal cation having a standard electrode potential E⁰ at 25 °C of more than -0.2 and 0.8 or less, preferably more than 0 and 0.5 or less. The oxidizing acidic aqueous solution preferably does not contain a metal cation having a standard electrode potential E⁰ at 25°C of -0.2 or less.

Examples of the metal cation having a standard electrode potential E⁰ at 25 °C of more than -0.2 and 0.8 or less include Pb²⁺, Sn²⁺, Ag⁺, Hg²⁺, and Cu²⁺. Cu²⁺ is preferred from the viewpoints of metal rarity, and safety and toxicity of the metal salt. Examples of a compound that generates Cu²⁺ include copper hydroxide, cupric oxide, cupric chloride, cupric bromide, copper sulfate, and copper nitrate. Cupric oxide is preferably used from the viewpoints of safety and toxicity of the inorganic compound, and an imparting efficiency of the dendritic layer.

Examples of the oxidizing acidic aqueous solution include a first aqueous solution and a second aqueous solution. The first aqueous solution contains nitric acid or an acid obtained by mixing nitric acid with any of hydrochloric acid, hydrofluoric acid, and sulfuric acid. The second aqueous solution contains peracetic acid or performic acid. The oxidizing acidic aqueous solution preferably contains nitric acid and cupric oxide. The cupric oxide is a metal cation generating compound.

An upper limit of a concentration of the nitric acid in the oxidizing acidic aqueous solution is preferably 40 mass% or less, more preferably 38 mass% or less, and still more preferably 35 mass% or less. A lower limit of the concentration of the nitric acid in the oxidizing acidic aqueous solution is preferably 10 mass% or more, more preferably 15 mass% or more, and still more preferably 20 mass% or more. If the upper limit of the concentration of the nitric acid is 40 mass% or less, the surface S1 of the metal member 1 can be sufficiently roughened. If the lower limit of the concentration of the nitric acid is 10 mass% or more, the copper ion is sufficiently dissolved in the oxidizing acidic aqueous solution.

An upper limit of the concentration of the copper ion (cupric ion) in the oxidizing acidic aqueous solution is preferably 15 mass% or less, more preferably 12 mass% or less, and still more preferably 8 mass% or less. A lower limit of the concentration of the copper ion (cupric ion) in the oxidizing acidic aqueous solution is preferably 1 mass% or more, more preferably 2 mass% or more, and still more preferably 2 mass% or more. If the copper ion concentration is 15 mass% or less, the cupric oxide is sufficiently dissolved in the oxidizing acidic aqueous solution, and a red copper residue is hardly generated on the surface S1 of the metal member 1. If the copper ion concentration is 1 mass% or more, the surface of the metal substrate can be efficiently roughened.

The concentration of the copper ion (cupric ion) in the oxidizing acidic aqueous solution can be adjusted to adjust the average number density of the main stems of the dendritic layer 11.

An upper limit of a temperature at the time of contact with the oxidizing acidic aqueous solution containing the metal cation is preferably 60°C or lower, and more preferably 50°C or lower. A lower limit of the temperature is preferably room temperature or higher, and preferably 30°C or higher. If the temperature at the time of contact with the oxidizing acidic aqueous solution containing the metal cation falls within the above range, it is possible to complete an ultra-roughening treatment at an economical speed while controlling an exothermic reaction. An upper limit of a treatment time is preferably 15 minutes or less, and more preferably 10 minutes or less. A lower limit of the treatment time is preferably 1 minute or more, and more preferably 2 minutes or more.

### (4) Method for manufacturing metal-resin composite

Next, a method for manufacturing the metal-resin composite 100 according to the first embodiment of the present disclosure will be described.

The method for manufacturing the metal-resin composite 100 includes a second preparation step, a third preparation step, and an injection step. Each of the second preparation step and the third preparation step is executed before the injection step. The order of execution of each of the second preparation step and the third preparation step is not particularly limited.

### (4.1) Second preparation step

In the second preparation step, a resin composition is prepared.

Examples of a method for preparing the resin composition include a method in which a resin, and, if necessary, a filler and a blending agent are mixed by a mixing device. Examples of the mixing device include a Banbury mixer, a single-screw extruder, a twin-screw extruder, and a high-speed twin-screw extruder.

### (4.2) Third preparation step

In the third preparation step, the metal member 1 is prepared. A method for preparing the metal member 1 is the same as the method described in the method for manufacturing the metal member 1.

### (4.3) Injection step

In the injection step, the resin member 2 is formed in the joining region R1A of the joining region R1 of the metal member 1 by injection molding. Thus, the resin member 2 is joined to the metal member 1 via the dendritic layer 11. That is, the metal-resin composite 100 is obtained.

An injection molding machine is used for the injection molding. The injection molding machine includes a mold, an injection device, and a mold clamping device. The mold includes a movable-side mold and a fixed-side mold. The fixed-side mold is fixed to the injection molding machine. The movable-side mold is movable with respect to the fixed-side mold. The injection device flows a melt of the resin composition (hereinafter, referred to as "resin melt") into a sprue of the mold at a predetermined injection pressure. The mold clamping device clamps the movable-side mold at a high pressure so that the movable-side mold is not opened by a filling pressure of the resin melt.

First, the movable-side mold is opened, the metal member 1 is placed on the fixed-side mold, the movable-side mold is closed, and the mold is clamped. That is, the metal member 1 is housed in the mold. Thus, a resin member space is formed between the metal member 1 and the mold. The resin member space indicates a space in which the resin member 2 is formed.

Next, the injection molding machine fills the resin member space with the resin melt at a high pressure. The resin melt represents a resin melt. Next, the resin melt in the mold is cooled and solidified. Thus, the resin member 2 joined to the joining region R1A via the dendritic layer 11 is formed. That is, the metal-resin composite 100 is obtained.

In the injection step, at least one of injection foam molding and rapid heat cycle molding (RHCM, heat & cool molding) may be used in combination with the injection molding. In the rapid heat cycle molding, the mold is rapidly heated and cooled. Examples of a method for the injection foam molding include a first method, a second method, and a third method. In the first method, a chemical foaming agent is added to the resin composition. In the second method, nitrogen gas or carbon dioxide gas is directly injected into a cylinder portion of the injection molding machine. In the third method, the nitrogen gas or carbon dioxide gas is injected into the cylinder portion of the injection molding machine in a supercritical state. In any of these methods, as a method for controlling the mold, counter pressure can be used, or core back can be used depending on the shape of the resin member 2.

The rapid heat cycle molding is carried out by connecting a quick heating and cooling device to the mold. Examples of a heating method include a steam type, a pressurized hot water type, a hot water type, a hot oil type, an electric heater type, and an electromagnetic induction heating type. Examples of the cooling method include a cold water type and a cold oil type.

As conditions for the rapid heat cycle molding method, for example, it is desirable that the mold should be heated to a temperature of 100°C or more and 250°C or less, and that the mold should be cooled after the injection of the resin melt is completed. The temperature of the mold can be appropriately adjusted according to the type of the thermoplastic resin. When the thermoplastic resin is a crystalline resin and has a melting point of lower than 200°C, the temperature of the mold is preferably 100°C or higher and 150°C or lower. When the thermoplastic resin is a crystalline resin and has a melting point of 200°C or higher, the temperature of the mold is preferably 140°C or higher and 250°C or lower. When the thermoplastic resin is an amorphous resin, the temperature at which the mold is heated is preferably 100°C or more and 180°C or less. The temperature of the mold indicates a temperature detected by a sensor inserted in the vicinity of a cavity of the mold.

### (5) Second embodiment

The metal member 1 according to a second embodiment of the present disclosure will be described.

In the second embodiment, the metal member 1 has the joining region R1. The L value in the CIE 1976 (L*a*b*) color space of the region of the joining region R1 is 65 or more.

In the second embodiment, the metal member 1 has the joining region R1. Therefore, when the resin member 2 is joined to the metal member 1, a melt of the resin member 2 effectively enters a recess of the dendritic layer 11. Thus, a physical resistance force (anchor effect) is effectively exerted between the metal member 1 and the resin member 2. That is, the dendritic layer 11 enables firm joining between the metal member 1 and the resin member 2, which has been conventionally difficult. The L value of the joining region R1 is 65 or more, and the surface roughness of the joining region R1 is less noticeable with respect to the flat surface. That is, the change in appearance due to roughening is suppressed. As a result, the metal member 1 suppresses a change in appearance due to roughening, and can secure sufficient joining strength with the resin member 2 without using an adhesive or the like.

Each of the macroscopic shape of the metal member 1, the macroscopic shape of the surface S1, and the material, according to the second embodiment, is the same as that exemplified in the first embodiment.

### (5.1) Joining region R1

Next, the joining region R1 according to the second embodiment of the present disclosure will be described.

The joining region R1 according to the second embodiment may be at least a part of the surface S 1 of the metal member 1 as in the first embodiment.

In the second embodiment, a lower limit of the L value in the CIE 1976 (L*a*b*) color space of the joining region R1 is 65 or more, preferably 70 or more, more preferably 75 or more, still more preferably 80 or more, and particularly preferably 85 or more. The lower limit of the L value is preferably as high as possible. When the lower limit of the L value falls within the above range, a change in appearance due to roughening is suppressed. A method for measuring the L value is the same as the method described in the Examples.

In the second embodiment, the upper limit of the arithmetic average roughness (Ra) of the joining region R1 is preferably 20.0 µm or less, more preferably 10.0 µm or less, still more preferably 8.0 µm or less, particularly preferably 6.0 µm or less, even more preferably 5.0 µm or less, and still even more preferably 2.5 µm or less, from the viewpoint of suppressing a change in appearance due to roughening.

Each of the lower limit of the arithmetic average roughness (Ra), the ten-point average roughness (Rzjis), the average length (RSm), the absolute value of the difference in L value, the absorbance difference (A₁ - A₀), and the abundance proportion of the metal oxide, of the joining region R1 according to the second embodiment, is the same as that exemplified in the first embodiment.

### (5.2) Dendritic layer

Next, the dendritic layer 11 according to the second embodiment of the present disclosure will be described.

Each of the average thickness T11 of the dendritic layer 11 and the average number density of the main stems of the dendritic layer 11 according to the second embodiment is the same as that exemplified in the first embodiment.

### (6) Method for manufacturing metal member

Next, a method for manufacturing the metal member 1 according to the second embodiment of the present disclosure will be described.

The method for manufacturing the metal member 1 according to the second embodiment is different from the method for manufacturing the metal member 1 according to the first embodiment in terms of the roughening step.

The method for manufacturing the metal member 1 according to the second embodiment further includes a first preparation step, a pretreatment step, a replacement step, a roughening step, a post-treatment step, and a dendritic layer formation step.

Each of the first preparation step, the pretreatment step, the replacement step, the post-treatment step, and the dendritic layer formation step according to the second embodiment is the same as the step exemplified in the first embodiment.

In the second embodiment, in the roughening step, the surface of the region where the dendritic layer 11 is formed, in the surface of the metal substrate, is roughened, and the L value of the surface of the region where the dendritic layer 11 is formed is set to 65 or more.

The method for roughening the surface S1 of the metal member 1 according to the second embodiment is similar to the method exemplified in the first embodiment.

### EXAMPLES

Hereinafter, the embodiments according to the present invention will be described in detail with reference to Examples. Note that the present invention is not limited to these Examples.

### [1] Example 1

### [1.1] Manufacture of metal member

A metal member was manufactured as follows.

### [1.1.1] First preparation step

As a metal material, an aluminum alloy plate (thickness: 2.0 mm, alloy No.: 5052) was prepared. The metal material was cut to obtain a rectangular parallelepiped metal substrate (length: 45 mm, width: 18 mm).

### [1.1.2] Pretreatment step

The obtained metal substrate was immersed in a first tank filled with a degreasing agent (60°C) of the following components, subjected to ultrasonic cleaning for 5 minutes, and then washed with ion-exchanged water.

### <Component of degreasing agent>

· Aluminum cleaner: 5 mass%
· Water: 95 mass%
The aluminum cleaner is a product named "Aluminum Cleaner NE-6" (manufactured by Meltex Inc.).

### [1.1.3] Replacement step

Next, the metal substrate was immersed in a second tank filled with an alkaline etching agent (30°C) of the following components for 2 minutes, and then washed with ion-exchanged water.

### <Component of alkaline etching agent>

· Sodium hydroxide: 19.0 mass%
· Zinc oxide: 3.2 mass%
· Water: 77.8 mass%

### [1.1.4] Roughening step

Next, the entire surface of the metal substrate was immersed in a third tank filled with a first acid etching aqueous solution (30°C) of the following components for 20 seconds, followed by swinging. Then, the metal substrate was washed with ion-exchanged water.

### <Component of first acid etching aqueous solution>

· Ferric chloride: 3.9 mass%
· Cupric chloride: 0.2 mass%
· Sulfuric acid: 4.1 mass%
· Water: 91.8 mass%

### [1.1.5] Post-treatment step

Next, the metal substrate was immersed in a fourth tank filled with ion-exchanged water to perform ultrasonic cleaning for 3 minutes, and then immersed in a fifth tank filled with an aqueous nitric acid solution (40°C) of the following components for 2 minutes. Thus, copper deposited on the surface of the metal substrate was mainly peeled off.

### <Components of aqueous nitric acid solution>

· Nitric acid: 30 mass%
· Water: 70 mass%

### [1.1.6] Dendritic layer formation step

Next, the entire surface of the metal substrate was immersed in a third tank filled with a second acid etching aqueous solution (40°C) of the following components for 5 minutes, followed by swinging. The standard electrode potential E⁰ of Cu²⁺ was +0.337 (Vvs. SHE). Subsequently, the metal substrate was washed with ion-exchanged water and dried at 80°C for 15 minutes to obtain a metal member.

### <Component of second acid etching aqueous solution>

· Cupric oxide: 6.3 mass% (5.0 mass% as Cu²⁺)
· Nitric acid: 30.0 mass%
· Water: 63.7 mass%

### [1.2] Measurement of metal member, etc.

For the joining region of the obtained metal member, the measurement of, for example, the presence or absence of the dendritic layer, and the like were performed by the following measurement method or the like. The measurement results of the presence or absence of the dendritic layer, the arithmetic average roughness (Ra), the ten-point average roughness (Rzjis), the average length (RSm), the L value, and the appearance change evaluation, and the like, are shown in Table 1.

### [1.2.1] Method for confirming presence or absence of dendritic layer

The cross-sectional structure of the metal member was observed with a scanning electron microscope (SEM) to confirm the presence or absence of a dendritic layer.

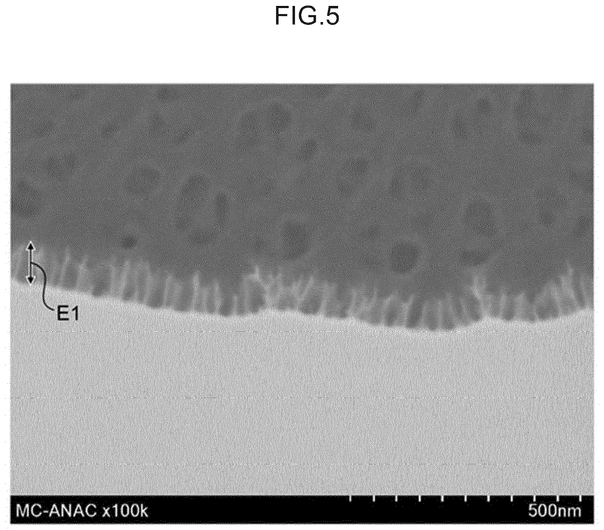

Fig. 5 is an SEM photograph (photographing magnification: 100,000 times) of the cross section of the joining region of the metal member of Example 1. In Fig. 5, reference numeral E1 denotes a dendritic layer. In Example 1, as shown in Fig. 5, a dendritic layer formed on the surface of the joining region of the metal member was confirmed.

### [1.2.2] Method for measuring surface roughness

The surface roughness was measured at six different measurement places under the following measurement conditions, and average values of the six measured values were taken as the arithmetic average roughness (Ra), the ten-point average roughness (Rzjis), and the average length (Rsm) of the joining region.

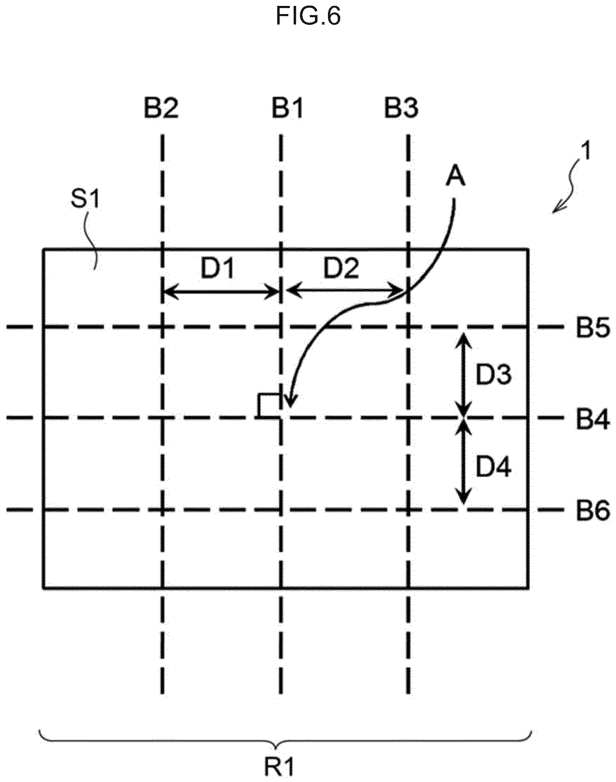

Fig. 6 is a top view of the metal member 1 for explaining a method for measuring surface roughness. As shown in Fig. 6, the measurement place is six straight portions B1 to B6 of the surface S1 of the joining region R1 of the metal member 1. The six straight portions B1 to B6 is composed of arbitrary three straight portions B1 to B3 and three straight portions B4 to B6 orthogonal to the three straight portions B1 to B3. Specifically, the straight portion B1 passes through a center portion A of the surface S1 of the joining region R1 of the metal member 1. The straight portions B1 to B3 are parallel to each other. The straight portion B4 passes through the center portion A of the surface S1 of the joining region R1 of the metal member 1. The straight portion B4 and the straight portion B1 are orthogonal to each other at the center portion A. The straight portions B4 to B6 are parallel to each other. Intervals D1 to D4 between the adjacent straight portions were 2 mm or more and 5 mm or less.

### <Conditions for measuring surface roughness>

· Measuring device: surface roughness measuring device "SURFCOM 1400D (manufactured by TOKYO SEIMITSU CO., LTD.)"
· Type: stylus type
· Stylus tip radius: 5 µm
· Reference length: 0.8 mm
· Evaluation length: 4 mm
· Measurement speed: 0.06 mm/sec

### [1.2.3] Method for measuring L value of joining region

The L value of the surface of the joining region of the metal member was measured using a spectral color difference meter "SE2000" manufactured by Nippon Denshoku Industries Co., Ltd.

### [1.2.4] Evaluation of change in appearance of joining region

The appearance of the joining region of the metal member was visually observed. Based on the appearance of the joining region, the change in appearance of the joining region was evaluated according to the following criteria. Evaluation criterion A, B or C is acceptable as the appearance evaluation.

### <Evaluation criteria>

A: No change in appearance (change in luster) due to roughening was observed at all.
B: The change in appearance (change in luster) due to roughening was slightly observed, but was in an acceptable range.
C: The change in appearance (change in luster) due to roughening was observed, but was in an acceptable range.
D: The change in appearance (change in luster) due to roughening was conspicuous.

### [1.2.5] Method for measuring average thickness of dendritic layer

The cross-sectional structure of the metal member was observed in an SEM photograph, and the average thickness of the dendritic layer was calculated. SEM photographs were taken of arbitrary ten points on the metal member. Next, an average thickness at a length of 1 µm was measured for arbitrary two spots for each SEM photograph. The same measurement was performed for the other nine points. An average value of the obtained measured values at 20 points in total was taken as the average thickness of the dendritic layer.

In Example 1, the thickness of the dendritic layer of the metal member was 490 nm.

### [1.2.6] Method for measuring average number density of main stems of dendritic layer

A certain area was selected from the SEM photograph of the surface of the metal member, and the "number of main stems" standing from the surface of the metal member was counted. The counted "number of main stems" was converted per unit length of the surface of the metal member, and the average number density of the main stems of the dendritic layer was measured. An average value measured at ten points in total in one SEM photograph measurement was taken as the average number density of the main stems of the dendritic layer.

As shown in Fig. 5, each of the plurality of main stems of the dendritic layer stands from the surface of the joining region of the metal member. In Example 1, the average number density of the main stems of the dendritic layer was 28/µm.

### [1.2.7] Method for measuring specific surface area of joining region

The metal member was vacuum-heated and degassed (100°C), and then an adsorption isotherm was measured by a nitrogen gas adsorption method at a liquid nitrogen temperature (77 K) using "BELSORP-max" (manufactured by MicrotrackBEL Corp.), and the specific surface area of the joining region was determined by a BET method.

In Example 1, the specific surface area of the joining region of the metal member was 0.21 m²/g.

### [1.2.8] Measurement of absorbance difference (A₁ - A₀) in joining region

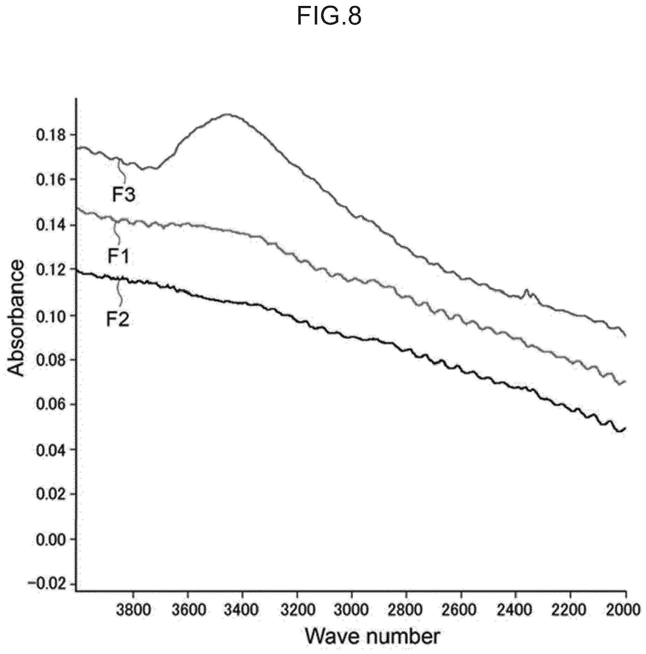

The FT-IR spectrum of the surface of the joining region of the metal member was measured under the condition: an infrared light incident angle of 85° using a device in which a Fourier transform infrared spectrophotometer (FTIR) manufactured by Shimadzu Corporation and a high-sensitivity reflection measurement device "RAS-8000" were combined. The measured spectrum chart of the Fourier transform infrared spectroscopic analysis is shown in Fig. 8. In Fig. 8, reference numeral F1 denotes a spectrum chart of Example 1. Reference numeral F2 denotes a spectrum chart of Reference Example 1 which will be described later. Reference numeral F3 denotes a spectrum chart of Reference Example 2. Specifically, Reference Example 2 shows a spectrum chart of a metal member (hereinafter, referred to as "known metal member") prepared in the same manner as in Example 1 described in the specification of Japanese Patent Application Laid-Open (JP-A) No. 2018-144475. The surface of the known metal member is subjected to a roughening treatment by being immersed in warm water. Therefore, a coating film containing aluminum hydroxide is formed on the surface of the known metal member.

As shown in Fig. 8, the spectrum chart of Reference Example 2 has a broad absorption peak having a peak top at 3400 cm⁻¹. In Reference Example 2, when an absorbance of the absorption peak observed at 3400 cm⁻¹ is A₁, and a virtual absorbance at 3400 cm⁻¹ on a straight line connecting an absorbance at 3800 cm⁻¹ and an absorbance at 2500 cm⁻¹ is A₀,, the absorbance difference (A₁ - A₀) value was more than 0.03.

In Example 1, as shown in Fig. 8, the absorbance difference (A₁ - A₀) value was about 0.

### [1.3] Manufacture of metal-resin composite

A metal member composite was manufactured as follows.

### [1.3.1] Second preparation step

As a resin composition, "short fiber glass-reinforced polypropylene V7100" (manufactured by Prime Polymer Co., Ltd., component: 80 mass% of polypropylene and 20 mass% of glass fiber, physical properties of polypropylene: MFR (230°C, 2.16 kg load): 18 g/10 min) was prepared.

### [1.3.2] Third preparation step

As the metal member, the metal member immediately after drying in the [1.1.6] dendritic layer formation step described above was used.

### [1.3.3] Injection molding step

The metal member was immediately placed in a small dumbbell metal insert mold attached to a horizontal injection molding machine ("J55AD", manufactured by The Japan Steel Works, Ltd.). Next, the resin composition was injection-molded in the mold under the following molding conditions to form a resin member in the joining region of the metal member. Thus, a metal-resin composite was obtained.

### <Molding conditions>

· Cylinder temperature: 230°C
· Temperature of mold: 80°C
· Primary injection pressure: 93 MPa
· Pressure holding: 80 MPa
· Injection speed: 25 mm/sec

### [1.4] Various measurements of metal-resin composite

For the obtained metal-resin composite, the measurement of, for example, tensile shear strength, and the like were performed by the following measurement method and the like. The measurement results of the tensile shear strength are shown in Table 1. The allowable range of the tensile shear strength is 23 MPa or more.

### [1.4.1] Measurement of tensile shear strength

The metal-resin composite was measured by using a tensile tester "Model 1323 (manufactured by Aikoh Engineering Co., Ltd.), attaching a dedicated jig to the tensile tester, and pulling the metal-resin composite in the x direction (see Fig. 4) under the following measurement conditions. A breaking load (N) was divided by an area of the joining region to obtain the joining strength (MPa). In the joining region R1A, a first length La (see Fig. 4) was set to 5 mm, and a second length Lb (see Fig. 4) was set to 10 mm.

### <Conditions for measuring tensile shear strength>

· Temperature: room temperature (23°C)
· Distance between chucks: 60 mm
· Tensile speed: 10 mm/min

In Example 1, the tensile shear strength was 26.05 (MPa). A standard deviation σ was 0.2 MPa (N = 5). As the morphology of a fracture surface, only a base material fracture was observed.

### [1.4.2] Observation of cross section of joining region, and the like

The cross-sectional structure of the metal-resin composite in the joining region of the metal member was observed in an SEM photograph. Furthermore, the average thickness of the dendritic layer of the metal-resin composite was measured in the same manner as in the [1.2.2] method for measuring average thickness of dendritic layer described above.

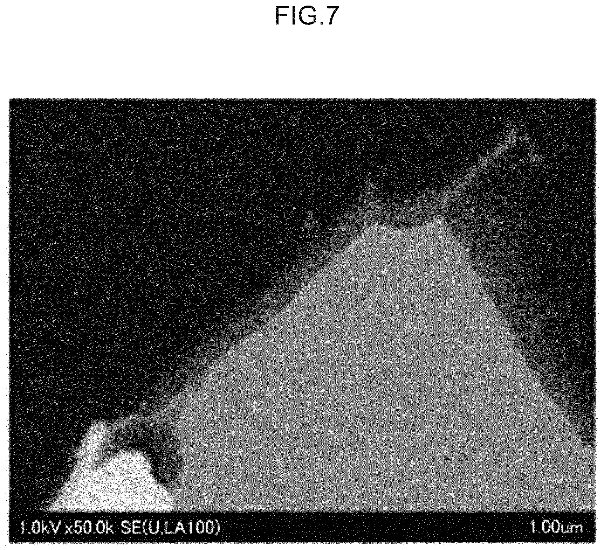

Fig. 7 is an SEM photograph (photographing magnification: 50,000 times) of a cross section of the metal-resin composite of Example 1. Specifically, Fig. 7 shows a SEM photograph of a cross section of the metal-resin composite in the joining region of the metal member. As shown in Fig. 7, it was confirmed that the nano-order dendritic layer covered the surface of the metal member so as to follow the micron-order uneven shape. The average thickness of the dendritic layer of the metal-resin composite was 500 nm. From these, it could be confirmed that, in the metal-resin composite, the joining region of the metal member was substantially the same as the joining region of the metal member before the resin member was joined.

### [2] Examples 2 to 6

In Examples 2 to 6, a metal member and a metal-resin composite were obtained in the same manner as in Example 1 except that the immersion time in the [1.1.4] roughening step was changed to the times shown in Table 1. The evaluation results of the presence or absence of the dendritic layer, the arithmetic average roughness (Ra), the ten-point average roughness (Rzjis), the average length (Rsm), the L value, the appearance change evaluation, and the like, of the obtained metal member are shown in Table 1. Further, the measurement results of the tensile shear strength of the obtained metal-resin composite are shown in Table 1.

### [3] Examples 7 to 12

In Examples 7 to 12, a metal member and a metal-resin composite were obtained in the same manner as in Example 1, except that the immersion time in the [1.1.4] roughening step was changed to the times shown in Table 1, and that the resin composition in the [1.3.1] second preparation step was changed to a polybutylene terephthalate (PBT) resin "DURANEX (registered trademark) 930HL" (manufactured by Polyplastics Co., Ltd.). The evaluation results of the presence or absence of the dendritic layer, the arithmetic average roughness (Ra), the ten-point average roughness (Rzjis), the average length (Rsm), the L value, the appearance change evaluation, and the like, of the obtained metal member are shown in Table 1. Further, the measurement results of the tensile shear strength of the obtained metal-resin composite are shown in Table 1.

### [4] Comparative Example 1

### [4.1] Manufacture of metal member

A metal member was manufactured as follows.

### [4.1.1] First preparation step

A metal substrate was obtained in the same manner as in the [1.1.1] first preparation step of Example 1.

### [4.1.2] Pretreatment step

The coating film present on the surface of the metal substrate was removed in the same manner as in the [1.1.2] pretreatment step of Example 1.

### [4.1.3] Replacement step

The [1.1.3] replacement step of Example 1 was not executed.

### [4.1.4] Roughening step

The metal substrate was roughened in the same manner as in the [1.1.4] roughening step of Example 1, except that the first acid etching aqueous solution was changed to the following third acid etching aqueous solution and that the immersion time was changed to the time shown in Table 1.

### <Component of third acid etching aqueous solution>

· Ferric chloride: 3.9 mass%
· Sulfuric acid: 4.1 mass%
· Water: 92.0 mass%

### [4.1.5] Post-treatment step

The surface of the metal substrate was cleaned in the same manner as in the [1.1.5] post-treatment step of Example 1. Thus, a metal member was obtained.

### [4.1.6] Dendritic layer formation step

The [4.1.6] dendritic layer formation step of Example 1 was not executed.

### [4.2] Measurement of metal member, etc.

For the joining region of the obtained metal member, measurement and the like were performed by the following measurement method and the like. The evaluation results of the presence or absence of the dendritic layer, the arithmetic average roughness (Ra), the ten-point average roughness (Rzjis), the average length (Rsm), the L value, the appearance change evaluation, and the like, of the obtained metal member are shown in Table 1.

### [4.3] Metal-resin composite

A metal-resin composite was obtained in the same manner as in Example 1 except that the metal member of Comparative Example 1 was used. The measurement results of the tensile shear strength of the obtained metal-resin composite are shown in Table 1.

### [5] Comparative Example 2

In Comparative Example 2, a metal member and a metal-resin composite were obtained in the same manner as in Comparative Example 1 except that the immersion time in the [4.1.4] roughening step was changed to the times shown in Table 1. The evaluation results of the presence or absence of the dendritic layer, the arithmetic average roughness (Ra), the ten-point average roughness (Rzjis), the average length (Rsm), the L value, the appearance change evaluation, and the like, of the obtained metal member are shown in Table 1. Further, the measurement results of the tensile shear strength of the obtained metal-resin composite are shown in Table 1.

### [6] Comparative Example 3

In Comparative Example 3, a metal member and a metal-resin composite were obtained in the same manner as in Comparative Example 1, except that the third acid etching aqueous solution in the [4.1.4] roughening step was changed to the following fourth acid etching aqueous solution, and that the immersion time in the [4.1.4] roughening step was changed to the time shown in Table 1. The evaluation results of the presence or absence of the dendritic layer, the arithmetic average roughness (Ra), the ten-point average roughness (Rzjis), the average length (Rsm), the L value, the appearance change evaluation, and the like, of the obtained metal member are shown in Table 1. Further, the measurement results of the tensile shear strength of the obtained metal-resin composite are shown in Table 1.

### <Fourth acid etching aqueous solution>

· Ferric chloride: 3.9 mass%
· Water: 96.1 mass%

### [7] Reference Example 1

In Reference Example 1, only the [1.1.1] first preparation step and the [1.1.2] pretreatment step of Example 1 were performed to obtain a metal member. The evaluation results of the presence or absence of the dendritic layer, the arithmetic average roughness (Ra), the ten-point average roughness (Rzjis), and the average length (Rsm), and the like, of the obtained metal member are shown in Table 1.

The FT-IR spectrum of the surface of the joining region of the metal member was measured in the same manner as in Example 1.

In Reference Example 1, as shown in Fig. 8, the absorbance difference (A₁ - A₀) value was about 0.

### [8] Example 13

In Example 13, a metal member was obtained in the same manner as in Example 1, except that the components of the second acid etching aqueous solution in the [1.1.6] dendritic layer formation step were changed to the following components. A metal-resin composite is obtained in the same manner as in Example 1 using the obtained metal member.

### <Component of second acid etching aqueous solution>

· Copper sulfate: 0.26 mass% (0.1 mass% as Cu²⁺)
· Nitric acid: 30.0 mass%
· Water: 69.7 mass%

The presence or absence of the dendritic layer, the arithmetic average roughness (Ra), the ten-point average roughness (Rzjis), and the average length (Rsm) of the metal member are the same as those in Example 1, and the arithmetic average roughness (Ra) is 5.0 µm or less. The L value and the difference in L value are the same as those in Example 1, and the L value is 75 or more. The appearance change evaluation is A or B. The metal-resin composite has a tensile shear strength of 23 MPa or more.

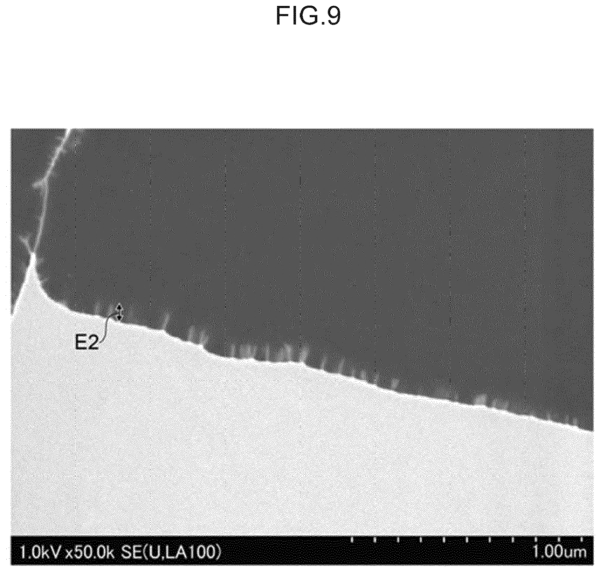

The average number density of the main stems of the dendritic layer of the metal member was measured in the same manner as in Example 1. Fig. 9 is a SEM photograph (photographing magnification: 100,000 times) of a cross section of the metal member of Example 13. In Fig. 9, reference numeral E2 denotes a dendritic layer.

As shown in Fig. 9, each of the plurality of main stems of the dendritic layer stands from the surface of the joining region of the metal member. In Example 13, the average number density of the main stems of the dendritic layer was 8/µm.

### [9] Example 14

In Example 14, a metal member was obtained in the same manner as in Example 1, except that the components of the second acid etching aqueous solution in the [1.1.6] dendritic layer formation step were changed to the following components. A metal-resin composite is obtained in the same manner as in Example 1 using the obtained metal member.

### <Component of second acid etching aqueous solution>

· Copper sulfate: 12.55 mass% (5.0 mass% as Cu²⁺)
· Nitric acid: 30.0 mass%
· Water: 57.5 mass%

The presence or absence of the dendritic layer, the arithmetic average roughness (Ra), the ten-point average roughness (Rzjis), and the average length (Rsm) of the metal member are the same as those in Example 1, and the arithmetic average roughness (Ra) is 5.0 µm or less. The L value and the difference in L value are the same as those in Example 1, and the L value is 75 or more. The appearance change evaluation is A or B. The metal-resin composite has a tensile shear strength of 23 MPa or more.

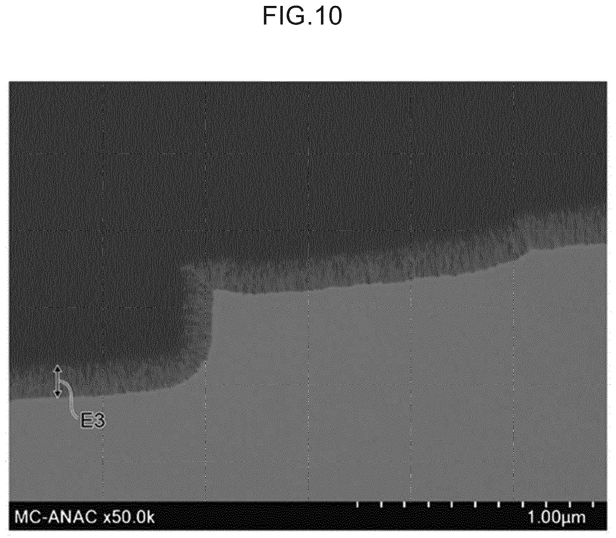

The average number density of the main stems of the dendritic layer of the metal member was measured in the same manner as in Example 1. Fig. 10 is a SEM photograph (photographing magnification: 100,000 times) of a cross section of the metal member of Example 14. In Fig. 10, reference numeral E3 denotes a dendritic layer.

As shown in Fig. 10, each of the plurality of main stems of the dendritic layer stands from the surface of the joining region of the metal member. In Example 14, the average number density of the main stems of the dendritic layer was 47/µm.

**[Table 1]**

| | Metal member | | | | | | | | | | Metal-resin composite | |
|---|---|---|---|---|---|---|---|---|---|---|---|---|
| | Roughening step | | Dendritic layer formation step | Presence or absence of dendritic layer | Arithmetic average roughness Ra | Ten-point average roughness Rzjis | Average length RSm | L value | Difference in L value | Appearance change evaluation | Material for resin member | Tensile shear strength |
| | Acidic etching solution | Immersion time | Acidic etching solution | | | | | | | | | |
| | | (sec) | | | (µm) | (µm) | (µm) | | | | | (MPa) |
| Example 2 | H₂SO₄+FeCl₃+CuCl₂ | 20 | CuO+HNO₃ | ○ | 0.33 | 2.57 | 98.36 | 85.86 | 0 | A | PP | 24.58 |
| Example 3 | | 60 | | ○ | 0.51 | 6.45 | 96.08 | 88.13 | 2.27 | A | | 25.24 |
| Example 4 | | 120 | | ○ | 2.23 | 13.89 | 106.84 | 83.43 | 2.43 | A | | 26.40 |
| Example 1 | | 180 | | ○ | 2.97 | 16.15 | 97.46 | 78.98 | 6.88 | B | | 26.05 |
| Example 5 | | 300 | | ○ | 4.68 | 24.71 | 108.38 | 75.18 | 10.68 | B | | 25.24 |
| Example 6 | | 500 | | ○ | 5.42 | 30.10 | 120.38 | 72.89 | 12.97 | C | | 25.42 |
| Example 7 | | 20 | | ○ | 0.33 | 2.57 | 98.36 | 85.86 | 0 | A | PBT | 38.48 |
| Example 8 | | 60 | | ○ | 0.51 | 6.46 | 96.08 | 88.13 | 2.27 | A | | 38.60 |
| Example 9 | | 120 | | ○ | 2.23 | 13.89 | 106.84 | 83.43 | 2.43 | A | | 38.34 |
| Example 10 | | 180 | | ○ | 2.97 | 16.15 | 97.46 | 78.98 | 6.88 | B | | 38.12 |
| Example 11 | | 300 | | ○ | 4.68 | 24.72 | 108.38 | 75.18 | 10.68 | B | | 37.14 |
| Example 12 | | 500 | | ○ | 5.42 | 30.10 | 120.38 | 72.89 | 12.97 | C | | 37.62 |
| Reference Example 1 | - | 0 | - | × | 0.17 | 1.01 | 12.45 | - | - | - | - | - |
| Comparative Example 1 | H₂SO₄+FeCl₃ | 180 | | × | 0.51 | 5.75 | 68.10 | 76.44 | 9.42 | A | PP | 0 |
| Comparative Example 2 | | 1560 | | × | 12.04 | 50.06 | 267.44 | 79.55 | 6.31 | C | | 21.56 |
| Comparative Example 3 | FeCl₃ | 360 | | × | 0.66 | 6.44 | 56.61 | 80.22 | 5.64 | A | | 10.89 |

In Table 1, the "difference in L value" represents an absolute value of the difference between the L value in a state where the surface S1 of the metal member 1 is not roughened and the L value measured in each of the Examples. In Examples 1 to 12 and Comparative Examples 1 to 3, the L value of Example 1 was used as the L value in the state where the surface S1 of the metal member 1 was not roughened. In Example 2, the immersion time in the roughening step is as short as 20 seconds. Therefore, this is because the L value of the j oining region of Example 1 and the L value of the joining region where the roughening step was not executed can be evaluated to be equivalent.

Evaluation criterion "A", "B" or "C" is acceptable as the appearance change evaluation. The allowable range of the tensile shear strength is "23 MPa or more".

In Table 1, in the item of the acidic etching solution in the roughening step, "-" indicates that the roughening step was not executed. In Table 1, in the item of the dendritic layer formation step, "-" indicates that the dendritic layer formation step was not executed. In Table 1, in the item of the presence or absence of dendritic layer, "o" indicates that the dendritic layer is formed on the surface of the metal member in the joining region, and "×" indicates that no dendritic layer is formed on the surface of the metal member in the joining region. In Table 1, in the item of the material for resin member, "PP" represents "short fiber glass-reinforced polypropylene V7100" (manufactured by Prime Polymer Co., Ltd.), and "PBT" represents a polybutylene terephthalate (PBT) resin "DURANEX (registered trademark) 930HL" (manufactured by Polyplastics Co., Ltd.).

In Table 1, in each of the items of the L value, the difference in L value, and the appearance change evaluation in Reference Example 1, "-" indicates that the L value was not correctly reflected due to irregular reflection by the oil and fat left on the surface of the metal member, so that the L value could not be measured.

In Table 1, in the item of the tensile shear strength of Reference Example 1, "-" indicates that the tensile shear strength was not measured.

The metal members of Examples 1 to 12 had a joining region in which a dendritic layer was formed on the surface, and the joining region had an arithmetic average roughness Ra of 20.0 µm or less. Therefore, the appearance change evaluation of the joining region was "A", "B", or "C", which was within the allowable range. Further, the tensile shear strength was 23 MPa or more, which was within the allowable range. That is, it was found that, in the metal members of Examples 1 to 12, a change in appearance due to roughening was suppressed, and that sufficient joining strength with the resin member could be secured without using an adhesive or the like.

The metal members of Examples 1 to 12 had a joining region in which a dendritic layer was formed on the surface, and the joining region had an L value of 65 or more. Therefore, the appearance change evaluation of the joining region was "A", "B", or "C", which was within the allowable range. Further, the tensile shear strength was 23 MPa or more, which was within the allowable range. That is, it was found that, in the metal members of Examples 1 to 12, a change in appearance due to roughening was suppressed, and that sufficient joining strength with the resin member could be secured without using an adhesive or the like.

In the metal members of Comparative Examples 1 to 3, the arithmetic average roughness Ra of the joining region was 20.0 µm or less, but no dendritic layer was formed on the surface of the joining region. The appearance change evaluation of the joining region was "A" or "C", which was within the allowable range, but the tensile shear strength was less than 23 MPa, which was outside the allowable range. That is, it was found that the metal members of Comparative Examples 1 to 3 had insufficient joining strength with the resin member unless an adhesive or the like was used.

In the metal members of Comparative Examples 1 to 3, the L value of the joining region was 65 or more, but no dendritic layer was formed on the surface of the joining region. Specifically, the appearance change evaluation of the joining region was "A" or "C", which was within the allowable range, but the tensile shear strength was less than 23 MPa, which was outside the allowable range. That is, it was found that the metal members of Comparative Examples 1 to 3 had insufficient joining strength with the resin member unless an adhesive or the like was used.

As shown in Fig. 8, in the metal member of Example 1, the absorbance difference (A₁ - A₀) value of Example 1 was about 0 as in Reference Example 1. Thus, it was found that no film containing aluminum hydroxide was formed on the surface of the metal member of Example 1.

In Example 1, cupric oxide (5.0 mass% as Cu²⁺) was used as a component of the second acid etching aqueous solution, and the average number density of the main stems of the dendritic layer of the metal member was 28/µm. In Example 13, copper sulfate (0.1 mass% as Cu²⁺) was used as a component of the second acid etching aqueous solution, and the average number density of the main stems of the dendritic layer of the metal member was 8/µm. In Example 14, copper sulfate (5.0 mass% as Cu²⁺) was used as a component of the second acid etching aqueous solution, and the average number density of the main stems of the dendritic layer of the metal member was 47/µm.

Comparison among Examples 1, 13 and 14 showed that the average number density of the main stems of the dendritic layer of the metal member depends on the concentration of Cu²⁺ in the second acid etching aqueous solution. Specifically, it was found that the average number density of the main stems of the dendritic layer of the metal member decreases as the concentration of Cu²⁺ in the second acid etching aqueous solution decreases.

The disclosure of Japanese Patent Application No. 2020-125708 filed on July 22, 2020 is incorporated herein by reference in its entirety.

All documents, patent applications, and technical standards described herein are incorporated herein by reference to the same extent as if each document, patent application, and technical standard are specifically and individually indicated to be incorporated by reference.

## Claims

1. A metal member having a region in which a dendritic layer is formed on a surface, wherein the region has an arithmetic average roughness Ra of 20.0 µm or less.

2. A metal member having a region in which a dendritic layer is formed on a surface, wherein the region has an L value in a CIE 1976 (L*a*b*) color space of 65 or more.

3. The metal member according to claim 1 or 2, wherein an arithmetic average roughness Ra of the region is 0.3 µm or more.

4. The metal member according to any one of claims 1 to 3, wherein the region has a roughened surface, and wherein, in the region, an absolute value of a difference in L value in a CIE 1976 (L*a*b*) color space between a state in which the surface of the metal member is not roughened and a state in which the surface of the metal member is roughened is 6.0 or less.

5. The metal member according to any one of claims 1 to 4, wherein, in the region, an abundance proportion of a metal oxide on the surface of the metal member as measured by X-ray photoelectron spectroscopy (XPS) is 80 area% or more with respect to a total of the metal oxide, a metal hydroxide, and water.

6. The metal member according to any one of claims 1 to 5,
wherein the metal member comprises aluminum,
wherein the surface of the metal member is subjected to Fourier transform infrared spectroscopic analysis in the region, and
wherein, when an absorbance of an absorption peak observed at 3400 cm⁻¹ is A₁, and an absorbance at 3400 cm⁻¹ on a straight line connecting an absorbance at 3800 cm⁻¹ and an absorbance at 2500 cm⁻¹ is A₀, an absorbance difference (A₁ - A₀) is 0.03 or less.

7. The metal member according to any one of claims 1 to 6,
wherein the metal member comprises aluminum, and
wherein a content of Si in the metal member is less than 6 mass% with respect to a total amount of the metal member.

8. The metal member according to any one of claims 1 to 7, wherein an arithmetic average roughness Ra of the region is 5.0 µm or less.

9. The metal member according to any one of claims 1 to 8, wherein an arithmetic average roughness Ra of the region is 2.5 µm or less.

10. The metal member according to any one of claims 1 to 9, wherein an average number density of main stems of the dendritic layer is 5/µm or more and 70/µm or less.

11. A metal-resin composite, comprising:
the metal member according to any one of claims 1 to 10; and
a resin member joined to at least a part of the surface of the metal member via the dendritic layer in the region.

12. A method for manufacturing a metal member comprising a dendritic layer formation step of etching at least a part of a surface of a metal member with an oxidizing acidic aqueous solution to form a dendritic layer,
wherein the oxidizing acidic aqueous solution comprises a metal cation having a standard electrode potential E⁰ at 25°C of more than -0.2 and 0.8 or less.

13. The method for manufacturing a metal member according to claim 12, further comprising a roughening step of roughening a surface of a region of the surface of the metal member, in which the dendritic layer is formed, and setting an arithmetic average roughness Ra of the surface of the region to 20.0 µm or less, or setting an L value, in a CIE 1976 (L*a*b*) color space, of the surface of the region to 65 or more,
wherein the roughening step and the dendritic layer formation step are executed in this order.

14. The method for manufacturing a metal member according to claim 12 or 13, wherein the oxidizing acidic aqueous solution comprises cupric oxide.
